# EUROPÄISCHE PATENTANMELDUNG

(11) **EP 1 284 228 A2**
(43) Veröffentlichungstag der Anmeldung: **19.02.2003**
(21) Anmeldenummer: 02017964.4
(22) Anmeldetag: 10.08.2002
(51) Int. Cl.: B65G 49/06

(54) **Verfahren zum Trennen von grossflächigen Flachgläsern im Stapel und mit einem Trennmittel versehenes zu stapelndes Flachglas**

(30) Priorität: 16.08.2001 DE 10140003
(71) Anmelder: Schott Glas, 55122 Mainz (DE); CARL-ZEISS-STIFTUNG trading as SCHOTT GLAS, 55122 Mainz (DE)
(72) Erfinder: Kreling, Matthias, Dipl.-Ing., 65719 Hofheim (DE); Hankes, Johannes, Dr.-Ing., 55268 Nieder-Olm (DE); Musgrave, P., Teesside TS19 7 JN (GB); Wijma, Gerard, 8431 PD Oosterwolde (FR) (NL)
(74) Vertreter: Fuchs Mehler Weiss & Fritzsche

(57) **Zusammenfassung**

Die Erfindung betrifft eine Verpackung zum Transport von veredeltem Flachglas (14). Zur Trennung der empfindlichen Glas-Oberflächen werden diese mit kunststoflkaschierten Papierstreifen (3) umschlungen, die den Abstand der Gläser (14) zur Vermeidung von Beschädigungen gewährleisten. Die auch als Banderolen bezeichneten Streifen (3, 3 a) zeichnen sich darüber hinaus durch ihre inerten chemischen und physikalischen Eigenschaften aus, die die Oberflächenqualität nicht beeinflussen. Insbesondere ist auch eine einfache und zuverlässige Automatisierung des Verpackungsprozesses möglich. Die Reduktion der notwendigen Materialmengen gegenüber dem heute verwendeten Papier erleichtern zudem wesentlich deren Handhabung.

## Beschreibung

Die Erfindung bezieht sich auf ein Verfahren zum Trennen von großflächigen Flachgläsern im Stapel durch Zwischenlagen.

Die Erfindung bezieht sich ferner auf ein mit einem Trennmittel versehenes zu stapelndes großflächiges Flachglas.

Im Herstellungsprozeß von großflächigen Flachgläsern bis zu einer Größe von 1500 x 1000 x 8 mm, insbesondere von veredelten Flachgläsern für den Bereich "home tech", werden Flachgläser geschnitten, kantenbearbeitet, teilweise gebohrt und in der Regel mittels Siebdruck dekoriert. Nach dem abschließenden thermischen Vorspannprozeß werden die Gläser in Behältnissen verschiedenster Art gesammelt. Dazu werden die Gläser einzeln vom Transportsystem manuell entnommen, optisch geprüft und anschließend zu 5 oder 10 Teilen gestapelt. Zum Schutz der empfindlichen Oberflächen gegen Beschädigung (z.B. Kratzer) und Verschmutzung werden auf unterschiedliche Weise verschiedenste Materialien
- sogenannte Zwischenlagen - zwischen die Gläser eingebracht. Die Stapel werden anschließend manuell je nach Bedarf mit weiterem Material
- vorzugsweise Papier - umwickelt. Diese Pakete werden in bereitstehende Einweg- oder Mehrwegbehälter gesammelt. Dies geschieht wahlweise horizontal oder vertikal. Mittels Gurtsystemen verschlossene Pakete sind anschließend transportbereit. Zum Teil wird alternativ zu Gurten auch mit zusätzlichem Füllmaterial eine Bewegung der Gläser im Paket verhindert.

Zur Weiterverarbeitung werden die Pakete beim Kunden manuell geöffnet und die Glasstapel darauffolgend - zum Teil automatisiert - scheibenweise entnommen.

Man kann bei den heute verwendeten Zwischenlagen nach gebundenen und ungebundenen Materialien unterscheiden.

Ungebundene Materialien werden entweder direkt auf das Glas oder auf Trägermaterialien gegeben, die dann gemeinsam als Trennmittel fungieren. Nachteilig wirkt sich bei solchen ungebundenen Zwischenlagen-Materialien aus, daß sie entweder nicht einfach und zuverlässig - also frei von sichtbaren Rückständen - manuell entfernbar sind oder dieser Vorgang aufwendig gestaltet sein muß, d.h. beispielsweise durch einen Waschprozeß. Solche Materialien sind insbesondere PMMA-Kugeln und Puder oder auch Naturwerkstoffe, wie Kork. Zudem vagabundieren solche Materialien zunehmend durch die Räumlichkeiten der Fertigung, wo sie sich auf Nachbarprozesse negativ auswirken können.

Die gebundenen Werkstoffe lassen sich wiederum in streifige oder flächige Formen unterteilen.

Streifige Zwischenlagen werden oftmals mit adhesiven Schichten versehen, die entweder elektrostatisch oder klebend am Glas anhaften. Deren Nachteil besteht in der auftretenden chemischen Wechselwirkung zwischen Kleber oder Haftschichten und dem Glas. Einseitige elektrostatische Anhaftung kann nur durch ein entsprechend kostenintensives Verbundmaterial erreicht werden. Eine doppelseitige Anhaftung ist nicht erwünscht, da die spätere Trennung der Gläser erschwert wird. Bekannt sind auch steifere Streifen, die nicht am Glas fixiert werden und rein formschlüssig innerhalb des Stapels in Position gehalten werden, z.B. durch Umbördelung des Streifenrandes, wie in die US 3 837 636 beschrieben. Die Automatisierbarkeit solcher Zwischenlagenformen ist dadurch jedoch erheblich erschwert. Um die notwendige Steifigkeit gegen Verwindung während oder nach dem Auftrag zu erzielen, muß eine Mindestmaterialstärke gewählt werden, die die Packungsdichte im Stapel erheblich reduziert.

Die flächigen gebundenen Werkstoffe sind insbesondere Spezialpapiere, die in ihrer Größe der Scheibe angepaßt werden und ebenfalls lose aufgelegt sind. Neben dem Aufwand zur Zurichtung des Materials entstehen erhebliche Volumina und auch Massen an Reststoffen nach dem Entpacken der Stapel, die entsorgt werden müssen. Zusätzlich erhöht sich das Risiko von schädlichen Einlagerungen im Papier schon allein durch die maximale bedeckte Glasfläche. Chemische Wechselwirkungen durch undefinierte Bestandteile im Papier, verursacht durch z.B. Luftfeuchtigkeit, sind ebenfalls nicht auszuschließen.

Weitere Möglichkeiten ergeben sich durch haftende Kunststoff-Folien, die vollflächig aufkaschiert werden. Hier sind Produkte erhältlich, die rückstandsfrei, jedoch nicht automatisiert, entfernbar sind. Diese sind mit weiteren Eigenschaften wie UV-Schutz oder extremer Kratzfestigkeit ausgestattet, die für die Anwendung zur Trennung der Flachgläser an sich unnötig sind und damit zusätzliche Kosten verursachen.

Daneben gibt es, wie in der GB 1 368 264 beschrieben, Mischformen von Materialien, die z.B. in flüssiger/plastischer Form streifenförmig aufgespritzt werden und anschließend erhärten oder deren beidseitige Haftung einseitig durch nachträgliche lokale Erwärmung verändert wird.

Auch Kombinationen, wie z.B. gepuderte Streifen als Trenn-Zwischenlagen, sind durch die US 5 607 753 bekannt geworden.

Sämtliche diesbezüglich bekannte Materialien hinterlassen jedoch Spuren auf der Glasoberfläche, die zudem schwer entfernbar sind.

Die FR 2 178 572 zeigt ein Verfahren zum Trennen von großflächigen Flachgläsern im Stapel durch schnurförmige Zwischenlagen in Form einer Endlosschnur, die fortlaufend beim Stapeln um die Glasscheiben gewunden wird. Dadurch ist die Handhabung und erneute Stapelung einzelner Flachgläser aus dem Stapel mit Zwischenlagen nicht möglich.

Der Erfindung liegt die Aufgabe zugrunde, ausgehend von dem eingangs bezeichneten Verfahren dies so zu führen sowie ausgehend von dem eingangs bezeichneten, mit einem Trennmittel versehenes, zu stapelndes großflächiges Flachglas dieses so auszubilden, daß mit einfachen Mitteln, ein rückstandsfreies, automatisierbares, wechselwirkungsfreies und entsorgungsfreundliches Stapeln der Flachgläser möglich ist, wobei die Flachgläser einzeln handhabbar sind.

Die Lösung dieser Aufgabe gelingt bei dem Verfahren zum Trennen von großflächigen Flachgläsern im Stapel durch Zwischenlagen erfindungsgemäß mit den Schritten:
- Bereitstellen von einzelnen streifenförmigen flächigen Zwischenlagen, deren Breite höchstens die Hälfte der Breite der Flachgläser und deren Länge mindestens die doppelte Höhe der Flachgläser beträgt, und
- Umschlingen aller Flachgläser jeweils einzeln mit mindestens einer derartigen flächigen streifenförmigen Zwischenlage in Form einer beide Seiten des Flachglases bedeckenden Schleife.

Hinsichtlich des großflächigen Flachglases, das zum Zwecke des Stapelns mit einem Trennmittel versehen ist, gelingt die Lösung der Aufgabe gemäß der Erfindung dadurch, daß jedes Flachglas jeweils einzeln mit mindestens einer streifenförmigen flächigen Zwischenlage, deren Breite höchstens die Hälfte der Breite des Flachglases und deren Länge mindestens die doppelte Höhe des Flachglases beträgt, in Form einer beide Seiten des Flachglases bedeckenden Schleife umschlungen ist.

Besondere Vorteile hinsichtlich der Logistik werden durch ein Verfahren erreicht, bei dem das Bereitstellen der einzelnen streifenförmigen Zwischenlage durch Ablängen von einem bevorrateten Endlosmaterial erfolgt.

Eine sichere Stapelung mit gleichmäßig verteilter Belastung wird mit Vorteil gemäß einer Weiterbildung der Erfindung durch ein Verfahren erreicht, bei dem jedes Flachglas mit mindestens zwei streifenförmigen Zwischenlagen beabstandet zueinander schleifenförmig umschlungen wird.

Alternativ dazu ist auch eine Ausgestaltung des erfindungsgemäßen Verfahrens denkbar, bei dem jedes Flachglas nur mit einer streifenförmigen Zwischenlage schleifenförmig umhüllt wird, derart, daß sich im Stapel aufeinanderfolgend abwechselnd die Zwischenlagen in der einen und der anderen Hälfte des Flachglases befinden.

Durch diese Verfahrensführung wird der Materialaufwand für die Zwischenlagen mindestens halbiert, was sich vorteilhaft auf die Kosten und die Entsorgbarkeit beim Entpacken des Stapels auswirkt. Eine vorteilhafte Handhabbarkeit der einzelnen Flachgläser beim Ver- und Entpacken ist durch ein Verfahren gegeben, bei dem streifenförmige Zwischenlagen bereitgestellt werden, deren Länge größer als die doppelte Höhe der Flachgläser ist und das schleifenförmige Umschlingen derart erfolgt, daß beide freie Enden der Zwischenlagen-Schleifen über die obere Kante der Flachgläser überstehen.

Durch Anfassen an den Überständen kann dann das einzelne Flachglas ohne die Gefahr von Beschädigungen gehandhabt werden.

Dieser Vorteil ist verstärkt bei einem Verfahren gegeben, bei dem beide überstehenden freien Enden zumindest über einen vorgegebenen Abschnitt unter Ausbildung der Schleife als Banderole miteinander verbunden werden.

Entsprechende Vorteile ergeben sich für das Flachglas, das durch vorgenannte Ausgestaltungen des erfindungsgemäßen Verfahrens mit einem Trennmittel versehen ist.

Das mit einem Trennmittel in Form einer Zwischenlage versehene Flachglas hat besondere Vorteile hinsichtlich der Kosten, der Inertheit und der Handhabung der Zwischenlagen, insbesondere beim Lösen des Stapels, wenn die streifenförmige Zwischenlage aus einem Trägermaterial mit Kunststoff-Beschichtung besteht, das so beschaffen ist, daß es sich ohne großen Kraftaufwand manuell zerreißen läßt.

Das Trägermaterial kann dabei einseitig oder beidseitig beschichtet sein.

Besonders kostengünstig ist es, wenn das Trägermaterial aus Papier besteht.

Die trennenden Zwischenlagen können beim Entstapeln manuell relativ leicht aufgerissen werden, wenn die Dicke der Zwischenlage ≤ 1 mm und ihre Breite ≤ 50 mm ist.

Anhand von in den Zeichnungen dargestellten Ausführungsbeispielen wird die Erfindung näher beschrieben.

Es zeigen:
- Fig. 1: in einer Draufsicht-Darstellung eine Zwischenlage, bestehend aus einem streifenförmigen Trägermaterial, das gemäß Figurenteil A beidseitig und gemäß Figurenteil B einseitig mit einem Kunststoff beschichtet ist,
- Fig. 2: in einer schematischen Seitenansicht eine Flachglasplatte, die an zwei verschiedenen Stellen mit einer streifenförmigen Zwischenlage in Form einer beide Seiten des Flachglases bedeckenden Schleife umschlungen ist, wobei die freien Enden der Schleifen über die Oberkante des Flachglases überstehen.
- Fig. 3: in einer perspektivischen Ansicht mit einer Ausschnitt-Darstellung im Figurenteil A einen Stapel von erfindungsgemäß entsprechend Fig. 2 ausgebildeten Flachglas-Platten, wobei die überstehenden freien Enden der Zwischenlagen banderolenartig miteinander verbunden sind,
- Fig. 4: in einer Darstellung entsprechend Fig. 3 einen entsprechenden Stapel, bei dem jedoch die überstehenden Enden der Schleifen nicht miteinander verbunden sind, und
- Fig. 5: in einer perspektivischen Ansicht einen Stapel von erfindungsgemäß ausgebildeten Flachglasplatten mit banderolenartig miteinander verbundenen Zwischenlagen, die innerhalb des Stapels gleichmäßig abwechselnd in der linken bzw. rechten Hälfte der Scheibe angebracht sind.

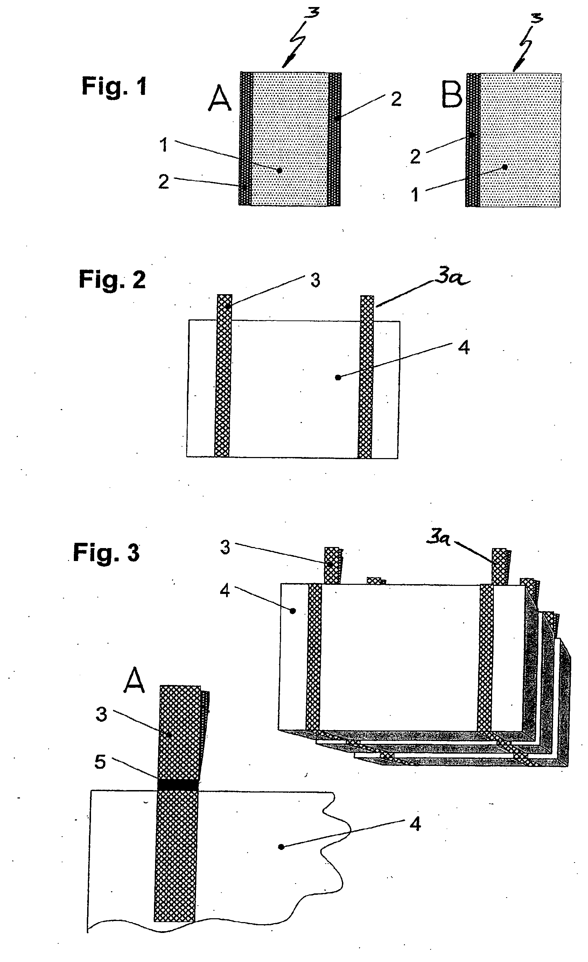

Die Figuren der Patentzeichnungen zeigen in verschiedenen Darstellungen mehrere vorteilhafte Ausführungsformen der erfindungsgemäßen Methode für die Trennung von gestapelten Flachgläsern 4 durch eine spezielle Zwischenlage 3. Ausgangspunkt für diese Zwischenlage 3 ist ein in Fig. 1 ausschnittsweise dargestellter Endlosstreifen, bestehend aus einem Trägermaterial 1, vorzugsweise hochwertiges Papier, wie reines Kraftpapier, das entweder gemäß dem Figurenteil A auf beiden Seiten oder gemäß dem Figurenteil B nur auf einer Seite mit einem Kunststoff wie Polyethylen oder Polypropylen dünn kaschiert ist (Positionsnummer 2).

Vorzugsweise werden, wie in Fig. 2 dargestellt, zwei solcher Streifen 3, 3 a schleifenartig um je eine Hälfte der Glasscheibe 4 geschlungen, so daß sie jeweils streifenförmige Bereiche auf beiden Seiten der Glasscheibe sowie Teile von zwei der vier Außenkanten bedecken. Beide Streifen werden anschließend so von dem auf einer Rolle bevorrateten Endlos-Rohmaterial abgetrennt, daß die beiden Enden jedes Streifens jeweils in gewünschtem Maße über die Außenkante der Glasscheibe hinausstehen.

Es hat sich dabei für die manuelle Handhabung beim späteren Vereinzeln der Scheiben als vorteilhaft erwiesen, wenn diese beiden überstehenden Enden unmittelbar neben deren nächstliegenden Glaskante miteinander verschweißt werden, so daß eine haltbare Verbindung entsteht. Derartig in einer Zone 5 verschweißte Streifen 3 bzw. 3 a sind in Fig. 3 insbesondere im Figurenteil 3 A dargestellt. Dies hat den Vorteil, daß die nun als Banderolen ausgebildeten Schlingen auch während Transport und manueller Handhabung jeder einzelnen Scheibe am Glas verbleiben und weiterhin ihre Schutzwirkung ausüben. Der beliebig lang ausführbare Materialüberstand hinter der Verschweißung 5 kann nun auch vorteilhafterweise als Lasche zum manuellen Tragen der jeweiligen Glasscheibe 4 verwendet werden, ohne diese zu berühren, wodurch das Risiko von Beschädigungen der Oberflächen der Glasscheiben zusätzlich reduziert wird.

Zum problemlosen Öffnen der Banderole erweist sich die Verwendung von Papier-Trägermaterial 1 einer Breite zwischen 20 mm und 100 mm mit einer Masse von 50 bis 150 Gramm je Quadratmeter als vorteilhaft. Die Stärke der Kunststoff-Kaschierung 2 liegt zwischen 10 und 30 µm. Diese Materialstärken begünstigen ein leichtes und somit schnelles Aufreißen der Banderole beim Entpacken und erlauben den Einsatz von Standard-Verschweißungen.

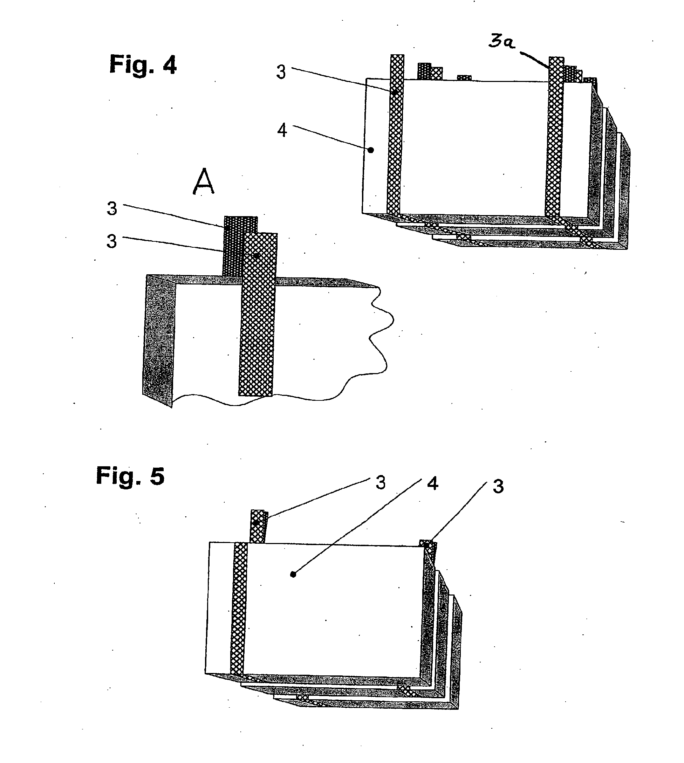

Für automatisiert entpackende Kunden hat es sich als vorteilhaft erwiesen, von der Verschweißung 5 abzusehen und somit beispielsweise ein Entfernen mittels Blasluft o.ä. zu ermöglichen, wie es aus der Fig. 4 insbesondere aus dessen Figurenteil A ersichtlich ist.

Der Vorteil der erfindungsgemäßen Ausführung der Zwischenlage liegt insbesondere darin, daß die Reststoffmenge gegenüber dem heute z.B. üblichen Papier um 60 % Masse reduziert werden kann. Durch die Kaschierung werden chemische Wechselwirkungen während Transport oder langer Lagerung, sowie Beschädigungen durch Verkratzen ausgeschlossen. Das auf Rollen bevorratete Material bedarf keiner besonderen Zurichtung bei Formatwechseln und kann damit praktisch verlustfrei verbraucht werden. Eine Automatisierung dieses Teilprozesses ist aufgrund solcher Standardisierung und vorhandener Maschinen erst zuverlässig durchführbar. Produkt-Informationen in Form von Beschriftungen auf der Banderole können praktisch über unbegrenzte Zeiträume an der einzelnen Glasscheibe verbleiben und dieser zugeordnet werden, wobei auch nach langer Zeit eine restlose Entfernung gewährleistet ist. Der zwischen den Gläsern verbleibende Zwischenraum sorgt für eine zusätzliche Belüftung, die der Bildung von Kondenswasser entgegenwirkt.

Andere vorteilhafte Ausführungsarten ergeben sich durch den Verzicht einer der beiden in den Figuren 2 - 4 dargestellten Banderolen 3, 3 a. Wird diese eine Banderole, wie in Fig. 5 dargestellt, innerhalb eines Stapels gleichmäßig abwechselnd in der linken oder rechten Hälfte der Scheibe angebracht, so läßt sich bei grundsätzlich gleichem Produktschutz der benötigte Materialeinsatz nochmals halbieren. Allerdings ist dann nur eine Entnahme der jeweils äußersten Scheiben des Stapels zulässig, da ansonsten bei Entnahme aus dem Stapelinneren schädlicher Glas-Glas Kontakt unvermeidlich würde.

### Bezugszeichenliste

- 1: Trägermaterial
- 2: Beschichtung
- 3: Zwischenlage
- 4: Flachglasscheibe
- 5: Verschweißungszone

## Patentansprüche

1. Verfahren zum Trennen von großflächigen Flachgläsern im Stapel durch Zwischenlagen mit den Schritten:
- Bereitstellen von einzelnen streifenförmigen flächigen Zwischenlagen (3, 3 a), deren Breite höchstens die Hälfte der Breite der Flachgläser (4) und deren Länge mindestens die doppelte Höhe der Flachgläser (4) beträgt, und
- Umschlingen aller Flachgläser (4) jeweils einzeln mit mindestens einer derartigen flächigen streifenförmigen Zwischenlage (3, 3 a) in Form einer beide Seiten des Flachglases (4) bedeckenden Schleife.

2. Verfahren nach Anspruch 1, bei dem das Bereitstellen der einzelnen streifenförmigen Zwischenlagen (3, 3 a) durch Ablängen von einem bevorrateten Endlosmaterial erfolgt.

3. Verfahren nach Anspruch 1 oder 2, bei dem jedes Flachglas (4) mit mindestens zwei streifenförmigen Zwischenlagen (3, 3 a) beabstandet zueinander schleifenförmig umschlungen wird.

4. Verfahren nach Anspruch 1 oder 2, bei dem jedes Flachglas (4) nur mit einer streifenförmigen Zwischenlage schleifenförmig umhüllt wird, derart, daß sich im Stapel aufeinanderfolgend abwechselnd die Zwischenlagen in der einen und der anderen Hälfte des Flachglases befinden.

5. Verfahren nach einem der Ansprüche 1 bis 4, bei dem streifenförmige Zwischenlagen (3, 3 a) bereitgestellt werden, deren Länge größer als die doppelte Höhe der Flachgläser (4) ist und das schleifenförmige Umschlingen derart erfolgt, daß beide freie Enden der Zwischenlagen-Schleifen über die obere Kante der Flachgläser (4) überstehen.

6. Verfahren nach Anspruch 5, bei dem beide überstehenden freien Enden zumindest über einen vorgegebenen Abschnitt (5) unter Ausbildung der Schleife als Banderole miteinander verbunden werden.

7. Großflächiges Flachglas (4), das zum Zwecke des Stapelns mit einem Trennmittel versehen ist, **dadurch gekennzeichnet, daß** jedes Flachglas (4) jeweils einzeln mit mindestens einer streifenförmigen flächigen Zwischenlage (3, 3 a), deren Breite höchstens die Hälfte der Breite des Flachglases und deren Länge mindestens die doppelte Höhe des Flachglases beträgt, in Form einer beide Seiten des Flachglases (4) bedeckenden Schleife umschlungen ist.

8. Flachglas nach Anspruch 7, **dadurch gekennzeichnet, daß** jedes Flachglas (4) mit mindestens zwei streifenförmigen Zwischenlagen (3, 3 a) beabstandet zueinander schleifenförmig umschlungen ist.

9. Flachglas nach Anspruch 7 oder 8, **dadurch gekennzeichnet, daß** die schleifenförmig um das Flachglas gewundene streifenförmige Zwischenlage (3, 3 a) beidseitig über die obere Kante des Flachglases (4) überstehende freie Enden aufweist.

10. Flachglas nach Anspruch 9, **dadurch gekennzeichnet, daß** die überstehenden freien Enden zumindest über einen vorgegebenen Abschnitt (5) unter Ausbildung der Schleife als Banderole miteinander verbunden sind.

11. Flachglas nach einem der Ansprüche 7 bis 10, **dadurch**
**gekennzeichnet, daß** die streifenförmige Zwischenlage (3, 3 a) aus einem Trägermaterial (1) mit Kunststoff-Beschichtung (2) besteht, das so beschaffen ist, **daß** es sich ohne großen Kraftaufwand manuell zerreißen läßt.

12. Flachglas nach Anspruch 11, **dadurch gekennzeichnet, daß** das Trägermaterial einseitig oder beidseitig beschichtet ist.

13. Flachglas nach Anspruch 11 oder 12, **dadurch gekennzeichnet, daß** das Trägermaterial aus Papier besteht.

14. Flachglas nach einem der Ansprüche 7 bis 13, **dadurch gekennzeichnet, daß** die Dicke der Zwischenlage (3, 3 a) ≤ 1 mm ist.

15. Flachglas nach einem der Ansprüche 7 bis 14, **dadurch gekennzeichnet, daß** die Breite der Zwischenlagen ≤ 50 mm ist.
